# EUROPEAN PATENT APPLICATION

(11) **EP 0 539 065 A1**
(43) Date of publication of application: **28.04.1993**
(21) Application number: 92309225.8
(22) Date of filing: 09.10.1992
(51) Int. Cl.: C08G 77/50

(54) **Platinum catalyzed process for preparation of alpha, omega-silylalkenes and organosiloxane copolymers**

(30) Priority: 21.10.1991 US 779792
(71) Applicant: DOW CORNING CORPORATION, Midland Michigan 48686-0994 (US)
(72) Inventor: Durfee, Loren Dean, Midland, Michigan (US); Hilty, Terrence Keith, Midland, Michigan (US)
(74) Representative: Laredo, Jack Joseph

(57) **Abstract**

The present invention is a process for the preparation of α,Ω-silylalkenes and organosiloxane copolymers and for the compositions prepared by the process. A platinum catalyst is employed which selectively catalyses the hydrosilylation of the terminal carbons of an α,Ω-triene with an organosiloxane containing at least one silicon-bonded hydrogen.

## Description

The present invention is a process for the preparation of alpha,omega-silylalkenes (α,Ω-silylalkenes) and organosiloxane copolymers and for the compositions prepared by the process. A platinum catalyst is employed which selectively catalyzes the hydrosilylation of the terminal carbons of an alpha,omega-triene (α,Ω-triene) with an organosiloxane containing at least one silicon-bonded hydrogen.

The reaction of olefins with SiH-containing compounds is well known. For example, British Patent No. 1,104,206, published February 21, 1968, describes a process where (1) a silicon compound containing at least one silicon-bonded hydrogen atom per molecule, there being not more than two hydrogen atoms attached to any one silicon atom, is reacted with (2) a compound containing aliphatically unsaturated carbon atoms, in the presence of (3) a platinum complex of the general formula (R₃P)₂PtCl₂ where R is a monovalent hydrocarbon radical free from aliphatic unsaturation. Specific examples of compounds containing aliphatically unsaturated carbon atoms include compounds containing one and two unsaturated bonds. The specific examples do not include trienes and, therefore, no recognition is made of the selectivity of platinum for catalyzing the hydrosilylation of the terminal carbons of α,Ω-trienes with organosiloxanes.

German Patent Application No. P-2,166,867.7, published Apr. 22, 1976, describes a process where the reaction of trichlorosilane or methyldichlorosilane with a triene is catalyzed with platinum compounds to form bis-silyl olefins. The bis-silyl olefins are further reacted with polymeric unsaturated hydrocarbon chains in the presence of a Lewis acid and a metathesis catalyst to form polymeric hydrocarbons with reactive silyl terminal groups.

Takahasi et al., **J. Org. Chem. 28**:3353-3356 (1963), describes a process for the chloroplatinic acid-catalyzed addition of hydrochlorosilanes to cis,trans,trans-1,5,9-cyclododecatriene. Takahasi et al. concluded that the silane added preferentially to the trans double-bond existing in the cyclododecatriene.

The cited art does not recognize that platinum can selective catalyze the hydrosilylation of the terminal carbons of α,Ω-trienes with organosiloxanes to form α,Ω-silylalkenes and organosiloxane copolymers.

Organosiloxane copolymers and α,Ω-silylalkenes formed by the present process are useful for the incorporation of silicon into polyolefins and can be crosslinked to form block copolymer gels and elastomers.

The present invention is a process for the preparation of α,Ω-silylalkenes and organosiloxane copolymers and for the compositions prepared by the process. A platinum catalyst is employed which selectively catalyzes the hydrosilylation of the terminal carbons of an α,Ω-triene with an organosiloxane containing at least one silicon-bonded hydrogen.

The present invention is a platinum catalyzed process for preparing organosiloxane copolymers of formula

Q{(CH₂)ₓCH=CH(CH₂)_{y+2}(R₂SiO)_{z}R₂Si(CH₂)ₓ₊₂CH=CH(CH₂)_{y}}ₙQ (1)

and formula

Q¹{(CH₂)ₓCH=CH(CH₂)_{y+2}(R₂SiO)_{z}R₂Si(CH₂)ₓ₊₂CH=CH(CH₂)_{y}}ₙQ¹ (2)

and α,Ω-silylalkenes of formula (R₃SiO)₂SiR(CH₂)ₓ₊₂CH=CH(CH₂)_{y}Q² (3), where x is an integer of one to 18, y is an integer of one to 18, z is an integer from one to 1,000, n is an integer from one to 1,000, each Q is independently selected from a group consisting of vinyl and radicals of formula -(CH₂)₂(R₂SiO)_{z}SiHR₂, each Q¹ is independently selected from a group consisting of Q and radicals of formula -(CH₂)₂SiR¹₃, Q² is selected from a group consisting of vinyl and radicals of formula -(CH₂)₂SiR(OSiR₃)₂; each R¹ is a radical independently selected from a group consisting of R and silyloxy radicals of formula R₃SiO-; and each R is a radical independently selected from a group consisting of alkyls and halide substituted alkyls of one to 20 carbon atoms, aryls and cycloalkyls of three to 20 carbon atoms.

The process comprises contacting a mixture comprising an α,Ω-triene of formula CH₂=CH(CH₂)ₓCH=CH(CH₂)_{y}CH=CH₂ (4) and either a dihydroorganosiloxane of formula H(R₂SiO)_{z}R₂SiH (5), to form an organosiloxane copolymer as described by formula 1 or a hydroorganosiloxane of formula (R₃SiO)₂RSiH (6), to form an α,Ω-silylalkene as described by formula 3, with an effective concentration of a platinum catalyst, at a temperature within a range of about 60°C. to 200°C.; where R, x, y and z are as previously described.

In a second embodiment of the present process, a mixture comprising an α,Ω-triene as described by formula 4, a dihydroorganosiloxane as described by formula 5 and a triorganosilane endblocker of formula R¹₃SiH is contacted with an effective concentration of a platinum catalyst, at a temperature within a range of about 60°C. to 200°C., where each R¹ is independently selected from a group consisting of R and silyloxy radicals of formula R₃SiO- and R is as previously described; to form organosiloxane copolymers as described by formula 2.

Also claimed are compositions prepared by the present process.

The present process can be run as a continuous process or as a batch process. A batch process is preferred. The process can be run in reactors of standard design, for example, a fixed-bed, a stirred-bed, a fluidized-bed or a stirred-tank reactor.

In a typical batch-type process, the α,Ω-triene and platinum catalyst are added to the reactor and then the. organosiloxane (i.e. hydroorganosiloxane or dihydroorganosiloxane) is added to the reactor at a controlled rate, to prevent heat buildup from the resultant exothermic reaction. The order of addition of the α,Ω-triene and organosiloxane to the present process is not critical. However, yield of the process is optimized when the organosiloxane is added to an α,Ω-triene and platinum catalyst mixture. In a continuous-type process, a mixture of the α,Ω-triene and organosiloxane can be contacted at a controlled rate with a particulate catalyst bed.

Optimal contact time of the α,Ω-triene and organosiloxane, in the presence of the platinum catalyst, will depend upon such factors as the nature of the platinum catalyst, the chemical structures of the α,Ω-triene and organosiloxane and the temperature at which the process is conducted. In general, contact times of 15 minutes to five hours are considered useful. Contact times of 30 minutes to two hours are preferred. Shorter contact times may be used, but may result in reduced yield of the desired product. Longer contact times may also be used, but to no perceived advantage.

The α,Ω-trienes which can be reacted in the present process are of formula CH₂=CH(CH₂)ₓCH=CH(CH₂)_{y}CH=CH₂, where both x and y are integers of one to 18. Preferred, is when x and y are integers of two to ten. The α,Ω-triene can be, for example, 1,4,7-octatriene; 1,5,9-decatriene or 1,6,11-dodecatriene. Generally, the value of x and y in the product organosiloxane copolymers and α,Ω-silylalkenes are the same value as for the α,Ω-triene. However, those skilled in the art will recognize that with some platinum catalysts, the remaining unsaturated bond may be shifted within the carbon chain resulting in different values for x and y in the products.

In the present process, the α,Ω-triene is contacted with an organosiloxane. The organosiloxane can be either a dihydroorganosiloxane of formula H(R₂SiO)_{z}SiR₂H, in which case the resultant product is an organosiloxane copolymer or a hydroorganosiloxane of formula (R₃SiO)₂RSiH, in which case the resultant product is an α,Ω-silylalkene. The value for z can be any integer of one to 1000. The preferred value for z is an integer of one to 100. Each substituent, R, of the organosiloxanes is a radical independently selected from a group consisting of alkyls and halide substituted alkyls of one to 20 carbon atoms, aryls and cycloalkyls of three to 20 carbon atoms. When R is a halide substituted alkyl, the halide atom can be chloride, fluoride, iodide and bromide. Preferred is when the halide atom is selected from a group consisting of fluoride and chloride. The substituent R can be, for example, methyl, ethyl, propyl, isopropyl, butyl, tert-butyl, eicosyl, 3,3,3-trifluoropropyl, perfluoropropyl, chloropropyl, chlorophenyl, phenyl, naphthyl, tolyl, xylyl, cyclopropyl, cyclobutyl, cyclopentyl, cyclohexyl and cycloeicosyl. Preferred is when the substituent R is methyl.

The molar ratio of the organosiloxane to the α,Ω-triene can be varied within wide limits. In general, a molar ratio of organosiloxane to α,Ω-triene within a range of about 0.5 to 6.0 is useful. When the organosiloxane is the hydroorganosiloxane, it is preferred that the molar ratio be within a range of about 1.9 to 2.1. When the organosiloxane is the dihydroorganosiloxane, it is preferred that the molar ratio be within a range of about 0.75 to 1.50.

The α,Ω-triene and organosiloxane are contacted in the presence of an effective concentration of a platinum catalyst specific for hydrosilylation of the terminal unsaturated carbon bonds of the α,Ω-triene. The platinum catalyst can be platinum metal, platinum compounds or platinum complexes. The platinum catalyst can be, for example, platinum metal, H₂PtCl₆.6H₂O, Pt^{o}{(CH₂=CHMe₂Si)₂O}₂, Pt^{o}{(CH₂=CHMe₂Si)₂O}(CH₂CH₂CH₃)₂, K(C₂H₄PtCl₃), (CH₃CH₂S)₂PtCl₂ and dichlorobis(ethylene)-µ,µ-dichloroplatinum(II). Preferred is when the platinum catalyst is platinum metal or H₂PtCl₆.6H₂O.

The present platinum catalyzed process may be run as either a homogeneous process or as a heterogeneous process. When the process is run as a heterogeneous process, the platinum catalyst may be supported on a solid support material. The solid support material can be any inert material of appropriate size and with the ability to retain the platinum catalyst. The platinum catalyst may be retained on or within the solid support material by standard means, for example, adsorption, ionic bonding, covalent bonding or physical entrapment. The solid support material may be, for example, carbon, activated carbon, graphite, silica, silica-gel, alumina, alumina-silica and diatomaceous earth. A preferred solid support material is activated carbon. The solid support material can be in the form of particles, powders, flakes, chips, chunks and pellets.

The size of the solid support material is not critical to the present invention. In general, solid support materials with diameters within a range of about 15 µ to 10 mm are considered useful. The lower size limit is determined principally by the ability to handle and recover the supported platinum catalyst. The upper size limit is determined principally by the ability to provide sufficient surface bound platinum catalyst for the process to run at an economically reasonable rate. A preferred diameter for the solid support material is within a range of about 0.5 to 3.0 mm.

The weight of platinum catalyst retained on the solid support material can be within a range of about 0.2 to 50 weight percent platinum. Preferred, is when the weight of platinum catalyst retained on the solid support is within a range of about 0.5 to 5.0 weight percent platinum. The weight percent of platinum catalyst on the solid support is calculated as the weight of platinum atoms retained by the solid support divided by the weight of the solid support, the quotient multiplied by 100.

An effective concentration of platinum catalyst in the present process is where the weight of platinum atoms is about 0.0001 to 0.5 percent of the combined weight of the α,Ω-triene and organosiloxane added to the process. Preferred is where the concentration of platinum atoms is about 0.001 to 0.1 weight percent of the combined weight of the α,Ω-triene and organosiloxane added to the process.

The present process can be conducted at a temperature within a range of about 60°C. to 200°C. A preferred temperature for conducting the process is within a range of about 100°C. to 180°C. The preferred method for conducting the present process is by refluxing the reaction mixture at a temperature within a range of about 100°C. to 180°C.

To facilitate refluxing within the preferred temperature range, an inert organic solvent may be added to the process. Any organic solvent which is inert in the present process and has a boiling point within a range of about 60°C. to 120°C. may be used for this purpose. The organic solvent can be, for example, hexane, heptane, benzene and toluene. The organic solvent may be present in the process within a weight range of about one to 30 weight percent of the combined weight of the α,Ω-triene and organosiloxane. Preferred is when the organic solvent is present in the process within a weight range of about five to ton weight percent of the combined weight of the α,Ω-triene and organosiloxane.

When the product to be formed is the organosiloxane copolymer, the degree of polymerisation of the copolymer can be controlled by adding a triorganosilane endblocker of formula R¹₃SiH, where each R¹ is independently selected from a group consisting of R and silyloxy radicals of formula R₃SiO- and R is as previously described.

The triorganosilane endblocker can be, for example, trimethylsilane, triethylsilane, triphenylsilane, dimethylphenylsilane or 1,1,1,3,5,5,5-heptamethyltrisiloxane.

A useful concentration of triorganosilane endblocker is about 0.1 to 60 weight percent of the combined initial weights of the triorganosilane endblocker, α,Ω-triene and dihydroorganosiloxane mixture. A preferred concentration of triorganosilane endblocker is about 2.0 to 20 weight percent.

Recovery of product organosiloxane copolymers and α,Ω-silylalkenes can be accomplished by standard means, for example, the products may be vacuum stripped, distilled and filtered. Recovery of the products may include retaining or using the products without further processing. When the recovered product is the organosiloxane copolymer, it is preferred that the value n be an integer within a range of 2 to 100.

In order that those skilled in the art may better understand how the present invention may be practiced, the following examples are given. These examples are given for illustration and are not intended to limit the instant claims.

### Example 1

The reaction of 1,5,9-decatriene with 1,1,1,3,5,5,5-heptamethyltrisiloxane in the presence of a platinum on carbon catalyst was assessed. The process was conducted by adding 73.2 g of 1,5,9-decatriene and 17 g of hexane to a 200 mL round-bottom flask containing 3.6 g of platinum on a carbon support (0.018 g platinum), to form a mixture. The platinum catalyst was purchased from Engelhard (Newark, NJ) and consisted of 0.5 % w/w of platinum on 4 x 8 mesh activated carbon particles. The mixture was brought to reflux (approximately 100°C.) and then 239 g of 1,1,1,3,5,5,5-heptamethyltrisiloxane was added dropwise. After completion of addition, the mixture was refluxed for two hours. The mixture was cooled, decanted from the catalyst and stripped of low-boiling materials under vacuum. The resultant product was a light tan fluid weighing 279 g (yield of 89%) with a refractive index of 1.4248, viscosity of 8.70 cs and a density of 0.87 g/mL. The fluid readily decolorized when a solution of 0.1 M bromine in carbon tetrachloride was added to it, confirming the presence of double bonds. The fluid was analyzed by gas chromotography (GC) using a mass spectrometer as a detector (MS) and by infrared spectroscopy (IR). The fluid was determined to consist of about 90 percent of an α,Ω-silylalkene of general formula (Me₃SiO)₂MeSi(CH₂)ₓ₊₂CH=CH(CH₂)_{y+2}MeSi(OSiMe₃)₂ and 10 percent of an α,Ω-silylalkene of general formula H₂C=CH(CH₂)_{y}CH=CH(CH₂)_{y+2}SiMe(OSiMe₃)₂.

### Example 2

The reaction of 1,5,9-decatriene with 1,1,3,3-tetramethyldisiloxane, in the presence of chloroplatinic acid, was assessed. The process was conducted by adding to a 200 mL round-bottom flask 44.3 g of 1,5,9-decatriene, 4.0 g of hexane and 7.2 mg of H₂PtCl₆.6H₂O dissolved in 37 µL of isopropyl alcohol. This mixture was heated to 100°C. and 44.2 g of 1,1,3,3-tetramethyldisiloxane was added dropwise to the flask. External heating was discontinued to the flask, however the exothermic reaction caused the temperature of the reaction mixture to increase quickly to 130°C. where refluxing began. The temperature of the reaction mixture was maintained at between 140°C. and 145°C. by control of the addition of the 1,1,3,3-tetramethyldisiloxane to the process. Following complete addition of the disiloxane, the reaction mixture was kept at 100°C. to 150°C. for 30 minutes. The resulting mixture was cooled and stripped of low boiling materials under vacuum. The resultant product was a fluid weighing 80.6 g (90 percent recovery). The fluid had a viscosity of 4,380 cs, a density of 0.9 g/mL and a refractive index of 1.4667.

### Example 3

The reaction of 1,5,9-decatriene with 1,1,3,3-tetramethyldisiloxane in the presence of platinum on activated carbon catalyst source was assessed. The process was conducted by adding 41.0 g of 1,5,9-decatriene and 6 g of hexane to a 200 mL round-bottom flask containing 1 g of platinum on activated carbon catalyst, as previously described, to form a mixture. The mixture was brought to reflux at approximately 130°C. and then 40.2 g of a mixture comprising 90 percent 1,1,3,3-tetramethyldisiloxane and 10 percent 1,1,3,3,5,5-hexamethyltrisiloxane was added dropwise. External heating of the flask was continued and the temperature of the reaction mixture slowly rose to about 150°C. Upon complete addition of the siloxane mixture, the temperature was maintained between 100°C. and 150°C. for one hour. The resulting mixture was decanted from the catalyst and stripped of low boiling materials under vacuum. The resultant product was a viscous fluid weighing 74.2 g (92 percent recovery). Infrared analyses showed no SiH band-between 2100 and 2200 cm⁻¹. The fluid readily decolorized upon addition of a 0.1 M bromine in carbon tetrachloride solution. The fluid exhibited the following physical properties: refractive index 1.4647, viscosity 560 cs and density 0.90 g/mL.

### Example 4

The reaction of 1,5,9-decatriene with 1,1,3,3-tetramethyldisiloxane in the presence of a platinum on activated carbon catalyst and various concentration of triorganosilane endblocker was assessed. The process was conducted by adding 40.8 g (0.30 mol) of 1,5,9-decatriene and 6 g of hexane to a 200 mL round-bottom flask containing 1 g of a platinum on activated carbon catalyst, as previously described, to form a first mixture. The first mixture was heated to 120°C. to 140°C. Then, a second mixture composed of 1,1,3,3-tetramethyldisiloxane (containing 10 percent 1,1,3,3,5,5-hexamethyltrisiloxane) and 1,1,1,3,5,5,5-heptamethyltrisiloxane (triorganosilane endblocker) was added dropwise to the first mixture. The moles (mol) of terminal vinyls contributed by the α,Ω-triene (mol -CH=CH₂), Si-H contributed by the dihydroorganosiloxane (mol HMe2Si-) and triorganosilane endblocker (mol HMeSi=) added to the process are presented in Table 1.

At completion of the addition of the second mixture to the first mixture, the temperature of the resultant mixture was 140°C. to 160°C. The resultant mixture was further heated for 1 to 2 hours at 140°C. to 160°C.

The colorless fluid products obtained by the above described process were vacuum stripped of volatiles and the viscosity (Visc (cs)) and refractive index (RI) of each fluid assessed. The results are presented in Table 1.

**Table 1**

| Effect of Triorganosilane Endblocker Concentration on Product Viscosity | | | | |
|---|---|---|---|---|
| HMe₂Si-(mol) | HMeSi= (mol) | -CH=CH₂ (mol) | RI | Visc (cs) |
| 0.57 | 0.03 | 0.60 | 1.4607 | 180.2 |
| 0.55 | 0.05 | 0.60 | 1.4587 | 144.5 |
| 0.39 | 0.18 | 0.60 | 1.4462 | 24.4 |

## Claims

1. A process for preparation of an organosiloxane copolymer, the process comprising contacting a mixture comprising an α,Ω-triene of formula CH₂=CH(CH₂)ₓCH=CH(CH₂)_{y}CH=CH₂ and a dihydroorganosiloxane of formula H(R₂SiO)_{z}SiR₂H, with an effective concentration of a platinum catalyst, at a temperature within a range of about 60°C. to 200°C. and recovering an organosiloxane copolymer of formula
Q{(CH₂)ₓCH=CH(CH₂)_{y+2}(R₂SiO)_{z}R₂Si(CH₂)ₓ₊₂CH=CH(CH₂)_{y}}ₙQ ;
where x is an integer of one to 18, y is an integer of one to 18, z is an integer of one to 1,000, n is an integer of one to 1,000, each Q is independently selected from a group consisting of vinyl and radicals of formula -(CH₂)₂(R₂SiO)_{z}SiHR₂ and each R is a radical independently selected from a group consisting of alkyls and halide substituted alkyls of one to 20 carbon atoms, aryls and cycloalkyls of three to 20 carbon atoms.

2. A process according to claim 1 where an inert organic solvent is added to the process.

3. A composition comprising an organosiloxane copolymer of formula
Q{(CH₂)ₓCH=CH(CH₂)_{y+2}(R₂SiO)_{z}R₂Si(CH₂)ₓ₊₂CH=CH(CH₂)_{y}}ₙQ
where x is an integer of one to 18, y is an integer of one to 18, z is an integer of one to 1,000, n is an integer of one to 1,000, each Q is independently selected from a group consisting of vinyl and radicals of formula -(CH₂)₂(R₂SiO)_{z}SiHR₂ and each R is a radical independently selected from a group consisting of alkyls and halide substituted alkyls of one to 20 carbon atoms, aryls and cycloalkyls of three to 20 carbon atoms.

4. A process for preparation of an α,Ω-silylalkene, the process comprising contacting a mixture comprising an α,Ω-triene of formula CH₂=CH(CH₂)ₓCH=CH(CH₂)_{y}CH=CH₂ and a hydroorganosiloxane of formula (R₃SiO)₂RSiH, with an effective concentration of a platinum catalyst, at a temperature within a range of about 60°C. to 200°C. and recovering an α,Ω-silylalkene of formula (R₃SiO)₂SiR(CH₂)ₓ₊₂CH=CH(CH₂)_{y}Q²; where x is an integer of one to 18, y is an integer of one to 18, Q² is selected from a group consisting of vinyl and radicals of formula -(CH₂)₂SiR(OSiR₃)₂ and each R is a radical independently selected from a group consisting of alkyls and halide substituted alkyls of one to 20 carbon atoms, aryls and cycloalkyls of three to 20 carbon atoms.

5. A process according to claim 4 where an inert organic solvent is added to the process.

6. A composition comprising an α,Ω-silylalkene of formula (R₃SiO)₂SiR(CH₂)ₓ₊₂CH=CH(CH₂)_{y}Q² where x is an integer of one to 18, y is an integer of one to 18, Q² is selected from a group consisting of vinyl and radicals of formula -(CH₂)₂SiR(OSiR₃)₂ and each R is a radical independently selected from a group consisting of alkyls and halide substituted alkyls of one to 20 carbon atoms, aryls and cycloalkyls of four to 20 carbon atoms.

7. A process for preparation of an organosiloxane copolymer, the process comprising contacting a mixture comprising an α,Ω-triene of formula CH₂=CH(CH₂)ₓCH=CH(CH₂)_{y}CH=CH₂, a dihydroorganosiloxane of formula H(R₂SiO)_{z}SiR₂H and a triorganosilane endblocker of formula R¹₃SiH, with an effective concentration of a platinum catalyst, at a temperature within a range of about 60°C. to 200°C. and recovering an organosiloxane copolymer of formula
Q¹{(CH₂)ₓCH=CH(CH₂)_{y+2}(R₂SiO)_{z}R₂Si(CH₂)ₓ₊₂CH=CH(CH₂)_{y}}ₙQ¹;
where x is an integer of one to 18, y is an integer of one to 18, z is an integer of one to 1,000, n is an integer of one to 1,000, each Q¹ is independently selected from a group consisting of vinyl, radicals of formula -(CH₂)₂(R₂SiO)_{z}SiHR₂ and radicals of formula -(CH₂)₂SiR¹₃; each R¹ is a radical independently selected from a group consisting of R and silyloxy radicals of formula R₃SiO-; and each R is a radical independently selected from a group consisting of alkyls and halide substituted alkyls of one to 20 carbon atoms, aryls and cycloalkyls of three to 20 carbon atoms.

8. A process according to claim 7 where an inert organic solvent is added to the process.

9. A composition comprising an organosiloxane copolymer of formula
Q¹{(CH₂)ₓCH=CH(CH₂)_{y+2}(R₂SiO)_{z}R₂Si(CH₂)ₓ₊₂CH=CH(CH₂)_{y}}ₙQ¹
where x is an integer of one to 18, y is an integer of one to 18, z is an integer of one to 1,000, n is an integer of one to 1,000, each Q¹ is independently selected from a group consisting of vinyl, radicals of formula -(CH₂)₂(R₂SiO)_{z}SiHR₂ and radicals of formula -(CH₂)₂SiR¹₃; each R¹ is a radical independently selected from a group consisting of R and silyloxy radicals of formula R₃SiO-; and each R is a radical independently selected from a group consisting of alkyls and halide substituted alkyls of one to 20 carbon atoms, aryls and cycloalkyls of three to 20 carbon atoms.
